Europäisches Patentamt

European Patent Office

Office européen des brevets

(11) Veröffentlichungsnummer: **0 029 520**
**B1**

(12) # EUROPÄISCHE PATENTSCHRIFT

(45) Veröffentlichungstag der Patentschrift:
**11.07.84**

(21) Anmeldenummer: **80106653.1**

(22) Anmeldetag: **30.10.80**

(51) Int. Cl.³: **C 25 B 1/10,** C 25 B 13/00,
C 23 F 13/00

(54) Verfahren zur Trennung der bei einer Schmelzflusselektrolyse entwickelten Gase und Schmelzflusselektrolysevorrichtung.

(30) Priorität: **24.11.79 DE 2947454**

(43) Veröffentlichungstag der Anmeldung:
**03.06.81 Patentblatt 81/22**

(45) Bekanntmachung des Hinweises auf die Patenterteilung:
**11.07.84 Patentblatt 84/28**

(84) Benannte Vertragsstaaten:
**FR GB IT**

(56) Entgegenhaltungen:
**EP - A - 0 022 252**
**DE - B - 2 637 633**

(73) Patentinhaber: **Kernforschungsanlage Jülich
Gesellschaft mit beschränkter Haftung, Postfach 1913,
D-5170 Jülich (DE)**

(72) Erfinder: **Divisek, Jiri, Dr., Gutenbergstrasse 34,
D-5170 Jülich (DE)**
Erfinder: **Mergel, Jürgen, Artilleriestrasse 49,
D-5170 Jülich (DE)**

## Beschreibung

Die Erfindung bezieht sich auf ein Verfahren zur Trennung der an der Kathode beziehungsweise an der Anode bei einer Schmelzflusselektrolyse elektrolytisch entwickelten Gase durch einen feinporigen, elektrisch leitenden Separator sowie auf eine dafür geeignete Schmelzflusselektrolysevorrichtung.

Ein besonderes Anwendungsgebiet der Erfindung ist die Schmelzflusselektrolyse von Wasserdampf in einer Alkalihydroxidschmelze zur Herstellung von Wasserstoff aus Wasser.

Für die zukünftige Wasserstofftechnologie ist die wirtschaftliche Wasserstoffproduktion eine der wesentlichen Voraussetzungen. Es zeigt sich dabei, dass die Elektrolyse von in geschmolzenen Hydroxyden gelöstem Wasserdampf eine besonders vorteilhafte Art der Wasserstoffherstellung ist: Durch die dabei zwangsläufig gegebene erhöhte Arbeitstemperatur wird der Elektrolysevorgang sowohl energetisch als auch kinetisch weitgehend begünstigt.

Die einerseits günstige Anwendung erhöhter Temperaturen beschleunigt allerdings anderseits unerwünschte Vorgänge, die bei niedrigeren Temperaturen gehemmt sind, wie z.B. die Korrosion. Um dem Korrosionsangriff wirksam zu begegnen, wählt man üblicherweise solche Materialien für die Elektrolysezelle und die Elektroden, die in genügendem Masse korrosionsbeständig sind. Diese gängige Art, einem Korrosionsangriff zu begegnen, zwingt jedoch häufig dazu, sehr teure oder seltene Materialien zu verwenden oder auch solche Stoffe, deren Anwendung mit negativen Begleiterscheinungen verbunden ist, wie nachfolgend näher erläutert wird:

Ein besonderes Problem bildet die Auswahl eines geeigneten Diaphragmamaterials für geschmolzene Hydroxide, deren hoher Korrosivität nur wenige bekannte Materialien widerstehen können, so dass die Zahl der zur Verfügung stehenden Materialien stark begrenzt ist. Kunststoffe, zum Beispiel Teflon, sind wegen ihrer zu geringen Temperaturbeständigkeit nicht geeignet. Man kennt für diesen Zweck nur einige Metalloxide oder Oxidgemische. Folgt man den Literaturangaben (H. Lux, E. Renauer, E. Betz: Z. anorg. allg. Chemie, 310, [1961], 305), so kommen im wesentlichen nur $Al_2O_3$, $HfO_2$, $ZrO_2$ oder $ThO_2$ in Betracht.

Die Beständigkeit des billigsten dieser Oxide, nämlich des $Al_2O_3$, ist allerdings in der Hydroxidschmelze so eingeschränkt, dass jegliche poröse Struktur ausgeschlossen werden muss und nur irgendeine kompakte Form geeignet ist. Aus diesem Grunde wurden von der Anmelderin bereits (nichtporöse) Trennwände aus $\beta$-$Al_2O_3$, das ein Feststoffelektrolyt ist, vorgeschlagen. Das $\beta$-$Al_2O_3$ ist vorläufig jedoch noch nicht allgemein zugänglich und nur bei einer beschränkten Anzahl von Forschungsstätten verfügbar. Ferner ist die Entwicklung des Preises nur schwer abschätzbar und von vielen Faktoren abhängig, so dass es heikel erscheint, eine grosstechnische Produktion darauf abzustellen.

Von den übrigen oben genannten Metalloxiden kommt eigentlich nur das poröse $ZrO_2$ in Frage. Dieses Oxid ist ebenfalls nicht billig und ausserdem sehr schwer in einer mechanisch genügend stabilen und gleichzeitig ausreichend porösen Form zu erhalten. Vermutlich lässt sich das Zusammentreffen beider Eigenschaften auch in Zukunft nur sehr beschränkt beim $ZrO_2$ erreichen.

Auf der Suche nach einem billigen Diaphragma wurde auch schon versucht, Diaphragmen aus Metallnetzen zu verwenden (Winnacker-Küchler: Chemische Technologie, Band 6, S. 97). Diese haben jedoch zum einen nur eine schlechte Trennwirkung, die für die Wasserstoff/Sauerstoff-Separation völlig unzureichend ist, und zum anderen werden sie von der Schmelze schon in einigen Tagen so stark angegriffen, dass sie sich zumindest teilweise auflösen.

Dasselbe passiert auch mit einem Diaphragma, das aus gesintertem Metallpulver besteht. Ein solches Diaphragma besitzt zwar wegen seiner feinen Porosität hervorragende Separationseigenschaften, es ist jedoch gerade aus diesem Grund sehr korrosionsanfällig.

Nach einer älteren europäischen Patentanmeldung (EP-A-1-0 022 252) der Anmelderin wird ein solches, insbesondere mit einem Drahtnetz versehenes Sintermetalldiaphragma bei erhöhter Temperatur in sauerstoffhaltiger Atmosphäre so weit aufoxidiert, dass ein ausreichend isolierender, mechanisch angemessen stabiler Körper resultiert, der als Diaphragma für die alkalische Wasserelektrolyse brauchbar ist.

Es wurde nun gefunden, dass eine solche Oxidation vermieden werden kann, wenn man das Lösungspotential des Separators durch entsprechende Vorspannung herabsetzt. Das heisst, durch ausreichend kathodische Polung des metallischen Diaphragmas in der Elektrolysezelle wird der an sich bestehenden Lösungstendenz des metallischen Sinterkörpers ausreichend entgegengewirkt.

Demgemäss ist das erfindungsgemässe Verfahren der eingangs genannten Art dadurch gekennzeichnet, dass ein kathodischer Polarisationsschutz des Separators vorgesehen wird.

Aus der DE-B2-2 637 633 ist zwar bereits ein Verfahren zum Korrosionsschutz von metallischen Gegenständen allgemein, wie z.B. Behältern, bekannt, bei dem der passive Zustand des pulsierend anodisch geschützten Gegenstandes durch kurzzeitigen Kurzschluss mit der Kathode mit Hilfe eines Potentialreglers (in den Pausen) verbessert werden soll. Dieses Korrosionsschutzverfahren lässt sich jedoch schwerlich in die alkalische Wasserelektrolyse einfügen.

Vorzugsweise wird beim erfindungsgemässen Verfahren als Separator ein poröses Sintermetalldiaphragma zwischen Anode und Kathode verwendet, das elektrisch über einen Regelwiderstand mit der Kathode verbunden ist, der so eingestellt beziehungsweise geregelt wird, dass am Diaphragma ein maximaler Entladungsstrom von weniger als etwa 1% der Gesamtbelastung der Elektrolyse auftritt.

Für die alkalische Schmelzflusselektrolyse von Wasser eignet sich als Diaphragma insbesondere eine poröse Nickelmembran, wie sie zum Beispiel durch Auftragen einer bindemittelhaltigen Metallpulvermasse auf ein Metallnetz mit nachfolgendem Brennen und Sintern des Pulvers in Wasserstoff erhalten wird. Die Porosität eines so hergestellten Nickel-Diaphragmas liegt vorzugsweise bei mindestens etwa 70%, wobei etwa 80% der Poren kleiner als 10 µm sind.

Eine zu stark negative Vorspannung des Diaphragmas sollte allerdings vermieden werden, damit sowohl mögliche Ladungsverluste als auch eine Wasserstoffentwicklung im Anodenraum mit der Gefahr der Knallgasexplosion nicht ins Gewicht fallen.

Nachfolgend wird die Erfindung anhand eines speziellen Ausführungsbeispiels beschrieben.

Beispiel Ein poröses Diaphragma wurde in folgender Weise hergestellt: Auf ein Nickelnetz (Maschenweite 0,25 mm, Drahtstärke 0,35 mm) wurde eine mit einer Kautschuklösung in Toluol als Bindemittel angeteigte Nickelpulvermasse in einer Gesamtmenge von 50 mg/cm² auf beide Seiten des Netzträgers als Nickelpulverschicht aufgetragen beziehungsweise gestrichen. Das verwendete INCO-Nickelpulver Typ 255 hatte eine Teilchengrösse von 2,3 bis 3 µm. Nach 15 Minuten Sintern unter Wasserstoff bei 800°C wurde ein 0,5 mm dickes Metallsinterdiaphragma mit 80%iger Porosität erhalten. 80% der Poren waren kleiner als 10 µm.

Der in 7n KOH bei 20°C gemessene spezifische Oberflächenwiderstand lag bei 0,10 Ωcm². Dieser ausgezeichnete Wert wird bei der Arbeitstemperatur (ca. 350°C) natürlich noch geringer. Die Reinheit der Gase $H_2/O_2$, die zunächst nur bei 75°C und 1 A/cm² getestet werden konnte, lag bei 0,20%.

Kathodisch ungeschützt löst sich dieses Diaphragma in der Hydroxidschmelze schon in einigen Stunden auf. Belastet man das Diaphragma dagegen mit einem Schutzstrom von nur 1 mA/cm² bei einer Elektrolysestromdichte von 500 mA/cm², so erhält man einen ausreichenden Korrosionsschutz, wie durch einen Langzeitversuch über mehr als 500 Stunden in der NaOH-Schmelze bei 360°C nachgewiesen wurde. Das Diaphragma war am Ende des Versuches noch voll funktionsfähig. Der gemessene Stromverlust, der – wenn er beachtlich wäre – gleichzeitig zu einer gefährlichen Bildung von Knallgas führen könnte, ist völlig vernachlässigbar.

Die angefügte Skizze zeigt eine Schaltung für die Durchführung des vorstehenden Verfahrens: die von einer Gleichstromquelle mit Spannung versorgte Elektrolysezelle 1 wird durch ein feinporiges elektrisch leitendes Diaphragma 2 in einen Anoden- und einen Kathodenraum unterteilt. Dieses Diaphragma 2 steht mit der Kathode über eine Verbindungsleitung 3 in Verbindung, in der ein Regelwiderstand 4 und gegebenenfalls ein Ampèremeter 5 vorgesehen sind.

Die Dimensionierung des Widerstandes richtet sich nach den Zellabmessungen und der Leitfähigkeit des Elektrolyten, wobei spezielle Werte ohne weiteres unter Zugrundelegung des Ohmschen Gesetzes abgeschätzt werden könnten. Übliche Werte werden in der Gegend von 500 bis 5000 Ω liegen.

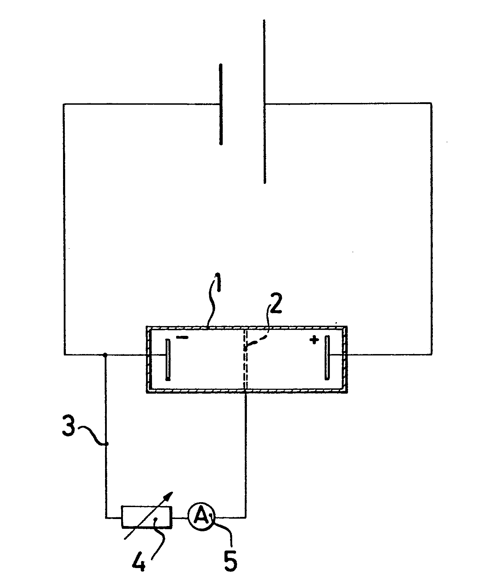

## Patentansprüche

1. Verfahren zur Trennung der an der Kathode beziehungsweise an der Anode bei einer Schmelzflusselektrolyse elektrolytisch entwickelten Gase durch einen feinporigen elektrisch leitenden Separator, dadurch gekennzeichnet, dass ein kathodischer Polarisationsschutz des Separators vorgesehen wird.

2. Verfahren nach Anspruch 1, dadurch gekennzeichnet, dass als feinporiger Separator ein poröses Sintermetalldiaphragma zwischen Anode und Kathode vorgesehen wird, das elektrisch über einen Regelwiderstand mit der Kathode verbunden ist, der so eingestellt beziehungsweise geregelt wird, dass am Diaphragma ein maximaler Entladungsstrom von weniger als etwa 1% der Gesamtbelastung der Elektrolyse auftritt.

3. Verfahren nach Anspruch 2, dadurch gekennzeichnet, dass als Diaphragma eine poröse Nickelmembran mit einer Porosität von ≳70% verwendet wird, deren Poren zu etwa 80% kleiner als 10 µm sind.

4. Vorrichtung zur Schmelzflusselektrolyse mit einer Elektrolysezelle, die durch eine poröses elektrisch leitendes Diaphragma in einen Kathoden- und einen Anodenraum unterteilt wird, und mit einer Gleichstromquelle zum Anlegen der Elektrolysespannung, gekennzeichnet durch eine Verbindungsleitung (3) mit Regelwiderstand (4) und gegebenenfalls Ampèremeter (5) zwischen Kathode und Diaphragma (2).

## Claims

1. Method for the separation of gases which are developed electrolytically at the cathode and at the anode respectively in a fusion electrolysis operation, through a fine-pored electrically conductive separator, characterised in that cathodic polarisation protection is provided for the separator.

2. Method according to claim 1, characterised in that a porous sintered metal diaphragm is provided as the fine-pored separator between anode and cathode, and is electrically connected to the cathode via a variable resistor which is so set or regulated that there occurs at the diaphragm a maximum discharge current of less than approximately 1% of the total electrolysis load.

3. Method according to claim 2, characterised in that a porous nickel membrane with a porosity of ≳70% is used as the diaphragm, approximately 80% of its pores being smaller than 10 µm.

4. Apparatus for fusion electrolysis with an electrolytic cell which is divided by a porous electrically conductive diaphragm into a cathode compartment and an anode compartment, and with a direct current source for applying the electrolysis voltage, characterised by a connecting line (3) with a variable resistor (4) and possibly an ammeter (5) between the cathode and the diaphragm (2).

## Revendications

1. Procédé de séparation des gaz dégagés électrolytiquement à la cathode et à l'anode, dans une électrolyse ignée, par un séparateur à pores fins conduisant l'électricité, caractérisé en ce qu'il consiste à prévoir une protection de polarisation cathodique du séparateur.

2. Procédé suivant la revendication 1, caractérisé en ce qu'il consiste à prévoir, entre l'anode et la cathode, comme séparateur à pores fins, un diaphragme en métal fritté poreux qui est relié électriquement à la cathode par l'intermédiaire d'une résistance de réglage, contrôlée ou réglée de manière à ce qu'il se produise au niveau du diaphragme un courant électrique de décharge maximum inférieur à 1% environ de la charge totale de l'électrolyse.

3. Procédé suivant la revendication 2, caractérisé en ce qu'il consiste à utiliser comme diaphragme une membrane poreuse en nickel ayant une porosité ≥70%, dont les pores sont à 80% environ inférieurs à 10 microns.

4. Dispositif d'électrolyse ignée comprenant une cellule d'électrolyse qui est subdivisée par un diaphragme poreux conducteur de l'électricité, en un compartiment cathodique et en un compartiment anodique, et une source de courant continu pour l'application de la tension d'électrolyse, caractérisé par un conducteur de liaison (3) avec une résistance de réglage (4) et, le cas échéant, un ampèremètre (5), entre la cathode et le diaphragme (2).

0 029 520

5